# EUROPÄISCHE PATENTSCHRIFT

(11) **EP 2 952 800 B1**
(45) Veröffentlichungstag und Bekanntmachung des Hinweises auf die Patenterteilung: **26.12.2018**
(21) Anmeldenummer: 15168877.7
(22) Anmeldetag: 22.05.2015
(51) Int. Cl.: F16N 13/16

(54) **SCHMIERMITTELPUMPE**
LUBRICATION PUMP
POMPE À LUBRIFIANT

(30) Priorität: 06.06.2014 DE 102014210909
(43) Veröffentlichungstag der Anmeldung: 09.12.2015
(73) Patentinhaber: SKF Lubrication Systems Germany GmbH, 69190 Walldorf (DE)
(72) Erfinder: Hess, Dieter, 67245 Lambsheim (DE); Kreutzkämper, Jürgen, 74915 Waibstadt-Daisbach (DE); Ruiter, Jan, 68723 Schwetzingen (DE); Schuermann, Stefan, 69190 Walldorf (DE)
(74) Vertreter: Kuhstrebe, Jochen

(56) Entgegenhaltungen:
- WO-A1-2008/009291
- CH-A5- 673 506
- DE-A1-102013 104 821
- DE-C- 761 335
- GB-A- 834 533

## Beschreibung

Vorliegende Erfindung betrifft eine Schmiermittelpumpe, insbesondere für eine Zylinderschmierung eines Verbrennungsmotors, mit mehreren Schmiermittelauslässen gemäß dem Oberbegriff von Patentanspruch 1.
Üblicherweise muss für eine Zylinderschmierung eines Verbrennungsmotors Schmiermittel gleichzeitig an mehrere Schmierstellen geführt werden, die üblicherweise gleichmäßig am Umfang einer Zylinderlaufbuchse verteilt sind. Die Zylinderschmierung selbst erfordert eine Einspritzung des Schmiermittels mit hoher Dynamik und erhöhtem Druck. Bei bekannten Schmiermittelpumpen, wie beispielsweise der DE19743955 A1 oder der DE102013104821 A1 sind mehrere auf einer Kreisbahn angeordnete Förderkolben vorgesehen, die über einen Arbeitskolben bewegt werden. Die Förderkolben dienen dabei der Dosierung und der Förderung des Schmiermittels zu den Auslässen, während der Arbeitskolben die Aufgabe der Kraftübertragung und der gleichzeitigen Betätigung der Förderkolben erfüllt. Da die Kolben bei der Zylinderschmierung synchron betätigt werden müssen und auch eine möglichst gute Kraftverteilung nötig ist, hat sich eine kreisrunde Anordnung der Dosierkolben rund um den Arbeitskolben bewährt. Dadurch kann der Arbeitskolben einen gleichmäßigen und großen Druck auf die Kolben ausüben.
Nachteilig bei den aus dem Stand der Technik bekannten Schmiermittelpumpen ist jedoch, dass die kreisförmige Anordnung um den Arbeitskolben zu Lasten einer kompakten Bauweise geht und die Schmiermittelpumpen für einen Einbau an den zu schmierenden Maschinen mit separat und extra angefertigtem Zubehör, wie beispielsweise Klemmen und Anbauflanschen, montiert werden müssen, um die runde Ausgestaltung auszugleichen. Zudem ist der Zusammenbau der Schmiermittelpumpe selbst aufgrund der vielen Einzelteile sehr aufwendig.

Aufgabe vorliegender Erfindung ist es deshalb, eine kompakte Schmiermittelpumpe bereitzustellen, die einfach zusammenbau- und montierbar ist.

Diese Aufgabe wird gelöst durch eine Schmiermittelpumpe gemäß Patentanspruch 1.

Erfindungsgemäß wird eine Schmiermittelpumpe, insbesondere für eine Zylinderschmierung eines Verbrennungsmotors bereitgestellt, die mehrere Schmiermittelauslässe aufweist, die über mehrere Kolben mit Schmiermittel beaufschlagbar sind. Dabei weist die Schmiermittelpumpe mindestens einen Arbeitsraum für die Kolben auf, dem ein Druckfluid zuführbar ist, über das die Kolben mit Druck beaufschlagbar sind. Dabei basiert die Erfindung auf der Idee, dass die Kolben mittels mindestens eines Synchronisationselements miteinander wirkverbunden ausgestaltet sind. Dadurch kann zum einen eine Schmiermittelpumpe bereitgestellt werden, deren Kolben über ein Druckfluid betätigbar sind, aber gleichzeitig über das mindestens eine Synchronisationselement sichergestellt wird, dass sich die einzeln von dem Druckfluid betätigten Kolben synchron bewegen und Schmiermittel zu den Schmiermittelauslässen fördern. Würde das erfindungsgemäße Synchronisationselement nicht vorhanden sein, so können aufgrund von unterschiedlichen Reibungszuständen oder Druckwiderständen an den Schmiermittelauslässen die Kolben nicht gleichzeitig bewegt werden, sondern, wenn auch minimal, zeitverzögert. Dadurch würde eine nicht exakt getaktete Zylinderschmierung auftreten, die unbedingt zu vermeiden ist. Zudem müssten für eine Funktionskontrolle alle Schmiermittelauslässe überwacht werden, während es aufgrund der erfindungsgemäßen Synchronisation der Kolben ausreichend ist, nur einen Kolben oder eine Schmierstelle zu überwachen. Selbstverständlich können auch Untergruppen der Kolben mit jeweils einem Synchronisationselement wirkverbunden sein, so dass insgesamt mehr als ein Synchronisationselement vorhanden ist. Dabei kann das Synchronisationselement mit den Kolben physikalisch verbunden sein, es ist jedoch auch möglich das Synchronisationselement und die Kolben berührungslos miteinander wirkzuverbinden. Dies ist beispielsweise über eine magnetische oder elektromagnetische Verbindung möglich.

Gemäß einem weiteren vorteilhaften Ausführungsbeispiel ist das Synchronisationselement von dem Druckfluid druckunbeeinflusst in dem Arbeitsraum angeordnet. Das bedeutet gleichzeitig, dass das Synchronisationselement lediglich zur synchronen Betätigung der Kolben dient, über das Synchronisationselement aber kein Arbeitsdruck auf die Kolben aufgebracht wird. Dadurch kann das Synchronisationselement relativ einfach ausgebildet sein, da es nicht auf die verschiedenen möglichen Drücke des Arbeitsdruckfluids eingestellt werden muss.

Dabei ist insbesondere vorteilhaft, wenn das Synchronisationselement derart in dem Arbeitsraum angeordnet ist, dass zwischen einer Innenwandung des Arbeitsraums und dem Synchronisationselement ein Spalt verbleibt. Über diesen Spalt kann sich Druckfluid auf allen Seiten des Synchronisationselements verteilen, so dass das Synchronisationselement insgesamt drucklos von dem Druckfluid umgeben ist.

Alternativ oder zusätzlich kann das Synchronisationselement auch mindestens eine Durchlassöffnung für das Druckfluid aufweisen, durch die das Druckfluid sich auf allen Seiten des Synchronisationselements verteilen kann. Dabei ist ebenfalls möglich, nicht nur eine, sondern mehrere Durchlassöffnungen zu schaffen, so dass eine möglichst gleichmäßige Verteilung des Druckfluids um das Synchronisationselement ermöglicht ist. Dadurch kann sichergestellt werden, dass das Druckfluid nicht an einer Stelle mehr belastet ist als an anderen Stellen. Gleichzeitig ist ebenfalls möglich, die Durchgangsöffnungsgröße unterschiedlich auszugestalten. Insbesondere bei einem zentral angeordneten Druckfluideinlass kann es vorteilhaft sein, wenn im Bereich des Druckfluideinlasses die Durchgangsöffnungsgröße groß gewählt ist, während in einem Bereich weiter weg vom Druckfluideinlass auch eine kleinere Durchgangsöffnungsgröße gewählt werden kann. Dadurch kann, falls nötig, die Stabilität des Synchronisationselements erhöht werden.

Gemäß einem weiteren vorteilhaften Ausführungsbeispiel ist der Kolben als Stufenkolben mit einem Arbeitskolbenabschnitt und einem Dosierkolbenabschnitt ausgebildet. Diese vorteilhafte Ausgestaltung ermöglicht es, die Anzahl der in der Schmiermittelpumpe verbauten Elemente zu reduzieren, da nicht mehr, wie aus dem Stand der Technik bekannt, ein Arbeitskolben und mehrere Dosierkolben verbaut werden müssen, sondern lediglich die Dosierkolben, die gleichzeitig als Arbeitskolben dienen.

Dabei ist insbesondere vorteilhaft, wenn der Arbeitskolbenabschnitt eine größere Druckbeaufschlagungsfläche, insbesondere mit einem größeren Durchmesser, aufweist als eine Druckbeaufschlagungsfläche des Dosierkolbenabschnitts. Dadurch kann eine Druckübersetzung gewährleistet werden, bei der selbst mit einem geringen Eingangsdruck des Druckfluids Schmiermittel mit hohem Druck über die Dosierkolben aus den Schmiermittelauslässen gedrückt werden kann. Dabei ist insbesondere vorteilhaft, wenn die Druckbeaufschlagungsfläche des Arbeitskolbenabschnitts um ein Vielfaches, insbesondere um ein Vier- bis Fünffaches größer ist als die Druckbeaufschlagungsfläche des Dosierkolbenabschnitts. Da üblicherweise Druckfluid mit einem Arbeitsdruck von ca. 40 bis 50 bar bei Schmiermittelpumpen verwendet wird, das Schmiermittel jedoch mit einem Druck von ungefähr 200 bar aus den Schmiermittelauslässen ausgeführt werden muss, ist eine derartige Schmiermitteldruckübersetzung sinnvoll.

Dabei sei allgemein erwähnt, dass das verwendete Druckfluid ein separates, der Schmiermittelpumpe zugeführtes Druckfluid sein kann, es jedoch auch möglich ist, das Schmiermittel selbst als Druckfluid einzusetzen.

Gemäß einem weiteren vorteilhaften Ausführungsbeispiel können die Kolben auch voneinander unterschiedlich große Druckbeaufschlagungsflächen am Arbeitskolbenabschnitt und/oder am Dosierkolbenabschnitt aufweisen. Dabei können auch unterschiedliche Anforderungen an den Schmiermittelbedarf gedeckt werden. So ist beispielsweise möglich, mit der erfindungsgemäßen Schmiermittelpumpe nicht nur eine Zylinderschmierung bereitzustellen, bei der an jedem Schmiermittelauslass Schmiermittel mit demselben Druck und/oder derselben Menge bereitgestellt wird, sondern es ist auch möglich, individuell an jedem Schmiermittelauslass einen Schmiermitteldruck und eine Schmiermittelmenge einzeln einzustellen. Dadurch können auch beispielsweise andere Geräte als die Zylinder der Verbrennungsmaschine über die erfindungsgemäße Schmiermittelpumpe mit Schmiermittel versorgt werden.

Gemäß einem weiteren vorteilhaften Ausführungsbeispiel weist die Schmiermittelpumpe weiterhin mindestens ein Rückstellelement, insbesondere eine Rückstellfeder auf, die dazu ausgelegt ist, die Kolben in eine Ausgangsposition rückzustellen. Dieses Rückstellelement dient dazu, die Kolben nach dem Ausgeben des Schmiermittels in ihre Ausgangsposition zurückzuführen und gleichzeitig über das in einem Dosierraum des Dosierkolbens entstehende Vakuum Schmiermittel aus einem Schmiermittelreservoir in den Dosierraum für die nächste Anwendung anzusaugen. Dabei kann das Rückstellelement mechanisch oder auch hydraulisch ausgebildet sein. Die mechanische Ausbildung hat dabei den Vorteil, dass keine weitere Ventilanordnung und kein weiterer Druckmittelzuführkanal bereitgestellt werden muss.

Dabei ist insbesondere vorteilhaft, wenn das Rückstellelement an dem Synchronisierungselement ansetzt und dies in die Ausgangsposition rückstellt. Selbstverständlich ist aber auch möglich, das Rückstellelement im Dosierraum oder an einer anderen Stelle der Arbeitskolben anzubringen. So kann insbesondere vorgesehen sein, bei der optionalen Ausbildung mittels eines Stufenkolbens das Rückstellelement in einem Totraum des Kolbens an der Stufe zwischen Arbeitskolbenabschnitt und Dosierkolbenabschnitt anzuordnen. Bei dieser Ausgestaltung kann auch ohne zusätzliche Ventile oder Kanäle ein hydraulisches Rückstellelement zum Einsatz kommen. Die Anordnung an dem Synchronisationselement hat jedoch den Vorteil, dass nicht jeder Kolben mit einem Rückstellelement ausgebildet werden muss, sondern lediglich ein Rückstellelement für das Synchronisationselement vorgesehen werden muss. Die mehrfache Ausgestaltung der Rückstellelemente hat den Vorteil, dass bei Ausfall eines Rückstellelements dennoch eine Rückstellung des Synchronisationselements bzw. der Kolben erfolgt.

Gemäß einem weiteren vorteilhaften Ausführungsbeispiel sind die Kolben linear in mindestens einer Reihe nebeneinander angeordnet. Da die Kolben miteinander über ein Synchronisationselement verbunden sind, die Druckbeaufschlagung aber auf die Kolben direkt erfolgt, ist eine lineare Anordnung möglich, die im Stand der Technik bei der Verwendung eines Arbeitskolbens aufgrund der ungünstigen Druckverteilung bei den außenliegenden Kolben zu vermeiden war. Die bevorzugte lineare Ausgestaltung hat zudem den Vorteil, dass mehr Kolben bei geringerem Bauraumbedarf angeordnet werden können, so dass die Schmiermittelpumpe insgesamt kompakter ausgestaltet werden kann. Dabei kann vorzugsweise die Schmiermittelpumpe eine Reihe von Kolben aufweisen, es ist jedoch auch möglich, wenn die Schmiermittelpumpe mehrere Reihen von linear nebeneinander angeordneten Kolben umfasst. Dadurch kann eine kompakte Schmiermittelpumpe bereitgestellt werden, die wenig Bauraum an ihrem Einsatzort beansprucht. Zudem kann diese nun ebenfalls platzsparend in einem eckigen Gehäuse angeordnet werden, das leicht an dem Einsatzort montierbar ist. Zusätzliche Montageelemente, wie beispielsweise Klammern oder zusätzliche Platten sind bei der erfindungsgemäßen Schmiermittelpumpe nicht mehr nötig. Dadurch wird die Montage vereinfacht und es können Kosten gespart werden.

Weiterhin ist ein Ausführungsbeispiel vorteilhaft, bei dem der Druckfluidkreislauf und der Schmiermittelkreislauf über einen Totraum voneinander getrennt ausgebildet sind. Die ist insbesondere bei der Verwendung von unterschiedlichen Fluiden vorteilhaft, da der Totraum eine Verunreinigung des Schmiermittels durch das Druckfluid verhindert. Dadurch kann sichergestellt werden, dass auch der zu schmierende Zylinderraum eines Verbrennungsmotors verunreinigungsfrei bleibt, was wiederum Fehlzündung entgegenwirkt. Zudem kann dadurch eine wartungsfreundliche Schmiermittelpumpe geschaffen werden.

Gemäß einem weiteren vorteilhaften Ausführungsbeispiel weist, der Kolben mindestens eine Aufnahme für das Synchronisationselement auf. Dabei kann die Aufnahme beispielsweise als umlaufende Nut ausgebildet sein. Dadurch ist ein einfacher Zusammenbau zwischen Kolben und Synchronisationselement möglich. Alternativ oder zusätzlich kann der Kolben aber auch mindeste eine oder mehrere diskret ausgebildete Aufnahmen aufweisen. Dabei können die diskret ausgebildeten Aufnahmen insbesondere höhenunterschiedlich zueinander ausgebildet sind. Dadurch wird die Möglichkeit geschaffen, die Kolben auf individuellen Positionen an dem Synchronisationselement anzuordnen. Dadurch kann die Volumenmenge von Schmiermittel in den zugehörigen Dosierräumen verändert werden, da der Dosierkolbenabschnitt der Kolben zu unterschiedlichen Zeiten während des Kolbenhubs die Schmiermittelzufuhrkanäle abschließt. Dadurch kann eine unterschiedliche Menge Schmiermittel an die Schmiermittelauslässe gefördert werden. Selbstverständlich ist es auch möglich die Kolben mit unterschiedlich hoch angeordneten Nuten bzw. Einzelaufnahmen zu versehen, so dass auch dann eine individuell einstellbare Position der Kolben an dem Synchronisationselement möglich ist.

Gemäß einem weiteren Ausführungsbeispiel ist an mindestens einem Kolben und/oder an dem mindestens einen Synchronisationselement mindestens ein, vorzugsweise optisches, Funktionsmesselement, insbesondere ein Hubstift vorgesehen. Dieses Funktionsmesselement dient der Funktionskontrolle und Positionskontrolle der Kolben.

Gemäß einem weiteren vorteilhaften Ausführungsbeispiel, weist die Schmiermittelpumpe zudem ein Hubbegrenzungselement auf, das dazu ausgelegt ist, den Hub der Kolben zu begrenzen. Vorteilhafterweise kann das Hubbegrenzungselement dabei zudem als Dämpfungselement ausgebildet sein, das das Erreichen einer Endstellung der Kolben dämpft. Dazu kann das Hubbegrenzungselement beispielsweise als Elastomer ausgebildet sein. Alternativ oder zusätzlich wäre es auch denkbar eine fluidische Dämpfung bereitzustellen, beispielsweise indem das Hubbegrenzungselement in eine fluidgefüllte Tasche oder Bohrung eintaucht und die Dämpfung und/oder Hubbegrenzung über eine Fluidverdrängung aus der Tasche oder Bohrung erfolgt.

Weitere Vorteile und vorteilhafte Ausgestaltungen sind in den Ansprüchen, der Beschreibung und den Zeichnungen dargestellt.

Im Folgenden soll die Erfindung anhand von in den Zeichnungen dargestellten Ausführungsbeispielen näher beschrieben werden. Dabei sind die gezeigten Ausführungsbeispiele rein exemplarischer Natur und sollen nicht den Schutzbereich der Anmeldung festlegen. Dieser wird allein von den anhängigen Ansprüchen definiert.

Es zeigen:
- Fig. 1:: eine schematische Schnittansicht der erfindungsgemäßen Schmiermittelpumpe in Ruhelage;
- Fig. 2:: eine schematische Schnittansicht durch die in Fig. 1 dargestellte Schmiermittelpumpe in Förderstellung;
- Fig. 3:: eine schematische Schnittansicht durch die in Fig. 1 und Fig. 2 dargestellte Schmiermittelpumpe in Ansaugstellung; und
- Fig. 4:: eine schematische Detailschnittansicht der erfindungsgemäßen Schmiermittelpumpe.

Im Folgenden werden gleiche oder gleichwirkende Elemente mit denselben Bezugszeichen gekennzeichnet.

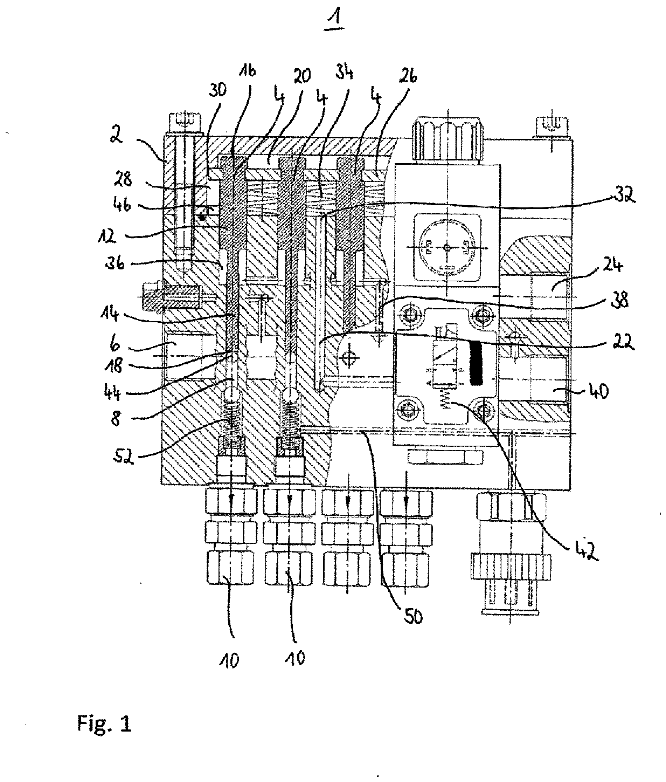

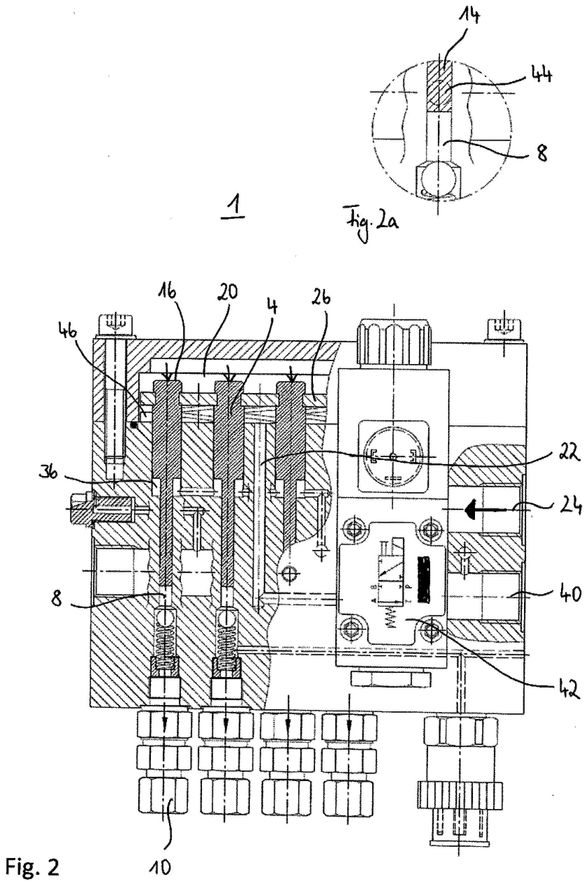

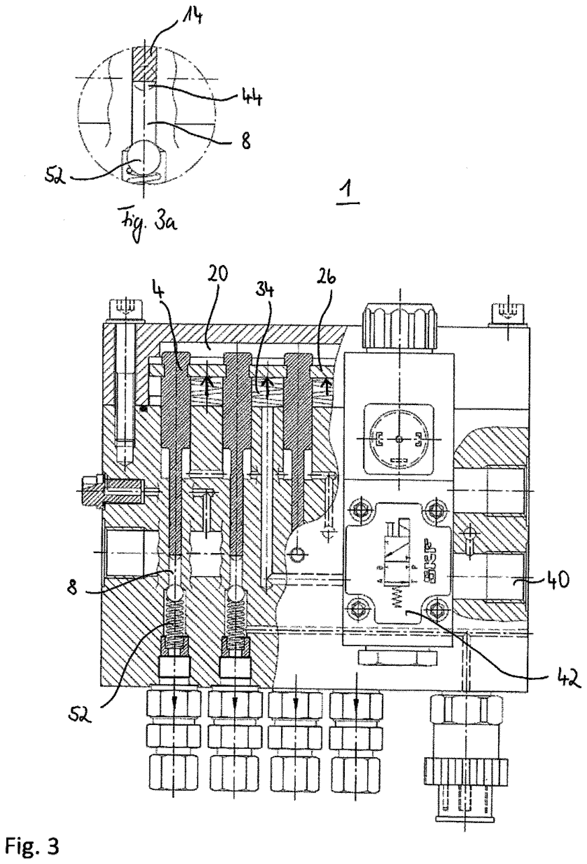

Die Fig. 1, 2 und 3 zeigen die erfindungsgemäße Schmiermittelpumpe 1 in verschiedenen Arbeitszuständen. Die einzelnen Elemente werden im Folgenden mit Bezug auf Fig. 1 beschrieben, sind jedoch gleichermaßen in den Fig. 2 und 3 zu finden.

Die Schmiermittelpumpe 1 weist ein Gehäuse 2 auf, in dem Kolben 4 angeordnet sind. Diese Kolben 4 sind dazu ausgelegt, Schmiermittel, das über einen Schmiermittelzufuhranschluss 6 in einen Dosierbereich 8 der Kolben 4 eingeführt wird, an Schmiermittelauslässe 10 abzugeben. Weiterhin zeigt Fig. 1, dass die Kolben 4 einen Arbeitskolbenabschnitt 12 und einen Dosierkolbenabschnitt 14 aufweisen, wobei die Kolben 4 vorzugsweise als Stufenkolben ausgebildet sind. Das bedeutet, dass eine Druckbeaufschlagungsfläche 16 am Arbeitskolbenabschnitt 12 unterschiedlich groß bezüglich einer Druckbeaufschlagungsfläche 18 am Dosierkolbenabschnitt 14 ausgebildet ist. In dem dargestellten Ausführungsbeispiel ist die Druckbeaufschlagungsfläche 16 des Arbeitskolbenabschnitts 12 deutlich größer ausgeführt als die Druckbeaufschlagungsfläche 18 des Dosierkolbenabschnitts 14. Dadurch kann eine Druckübersetzung bereitgestellt werden, so dass auch bei einer relativ geringen Druckausübung auf die Druckbeaufschlagungsfläche 16 des Arbeitskolbenabschnitts 12 ein sehr hoher Druck von der Druckbeaufschlagungsfläche 18 des Dosierkolbenabschnitts auf das Schmiermittel ausgegeben werden kann. Dadurch kann Schmiermittel, das in dem Dosierraum 8 vorhanden ist unter sehr hohem Druck aus den Schmiermittelauslässen 10 ausgeführt werden.

Weiterhin ist Fig. 1 zu entnehmen, dass die Kolben 4, insbesondere die Arbeitskolbenabschnitte 12, in einem Arbeitsraum 20 angeordnet sind. Der Arbeitsraum 20 ist über eine Druckfluidleitung 22 und einen Druckfluidanschluss 24 mit druckbeaufschlagten Druckfluid beaufschlagbar, so dass die Kolben 4 aus ihrer in Fig. 1 dargestellten Ruhelage bewegt werden können.

Weiterhin zeigt Fig. 1, dass die Kolben 4 über ein Synchronisationselement 26 miteinander verbunden sind. Dabei ist Fig. 1 zu entnehmen, dass das Synchronisationselement 26 in dem Arbeitsraum 20 derart angeordnet ist, dass es gleichmäßig von allen Seiten mit dem Druckfluid beaufschlagbar ist. Dazu kann beispielsweise zwischen einer Innenwandung 28 des Arbeitsraums 20 und dem Synchronisationselement 26 ein Spalt 30 ausgebildet sein, über den das aus der Druckfluidleitung 22 zugeführte Druckfluid an alle Seiten des Synchronisationselements 26 strömen kann. Alternativ oder zusätzlich zu dem Spalt 30 kann das Synchronisationselement 26 auch hier nicht dargestellte Durchgangsöffnungen aufweisen, die ermöglichen, dass sich das Druckfluid gleichmäßig im Arbeitsraum 20 ausbreitet. Dabei kann insbesondere vorgesehen sein, dass die Durchgangsöffnungen in der Nähe der Druckfluidleitungsmündung 32 größer ausgebildet sind als die im Randbereich angeordneten Durchgangsöffnungen, so dass kein lokaler Druckaufbau an dem Synchronisationselement 26 entstehen kann. Weiterhin zeigt Fig. 1, dass in dem Arbeitsraum 20 Rückstellelemente 34 vorgesehen sind, die auf das Synchronisationselement 26 wirken und für eine Rückstellung der Kolben 4 und des Synchronisationselements 26 in die Ruhelage sorgen.

Alternativ oder zusätzlich können die Rückstellelemente 34 selbstverständlich auch in einem Totraum 36, insbesondere an dem Übergang zwischen Arbeitskolbenabschnitt 12 und Dosierkolbenabschnitt 14, angeordnet sein. Der Totraum 36 selbst dient zur Aufnahme der Kolben 4 beim Zustellen und ist über eine Leitung 38 drucklos mit einem Druckfluidtankanschluss 40 verbunden. Weiterhin dient der Totraum 36 als Trennung zwischen Druckfluidkreislauf und Schmiermittelkreislauf, wodurch sichergestellt ist, dass das an den Schmiermittelauslässen 10 ausgegebene Schmiermittel nicht mit Druckfluid verunreinigt ist.

Weiterhin weist die Schmiermittelpumpe 1 ein Regelventil 42 auf, das regelt, ob der Arbeitsraum 20 mit Druck beaufschlagtem Druckfluid aus dem Druckfluidanschluss 24, oder drucklos mit dem Druckfluidtankanschluss 40 verbunden ist. In der in Fig. 1 dargestellten Ausführungsstellung ist die Schmiermittelpumpe in Ruhestellung, d. h. sowohl der Arbeitsraum 20 als auch der Totraum 36 sind drucklos und die Rückstellelemente 34 sind entspannt. Gleichzeitig ist ein Schmiermittelzufuhrkanal 44 freigegeben, so dass Schmiermittel aus einem Schmiermittelreservoir (nicht dargestellt) über den Schmiermittelzufuhranschluss 6 in den Dosierraum 8 eintreten kann.

Weiterhin ist in Fig. 1 dargestellt, dass in dem Arbeitsraum 20 ein Hubbegrenzungselement 46 angeordnet sein kann, das mit dem Synchronisationselement 26 zusammenwirkt und den Hub der Kolben 4 begrenzt. Dabei kann das Hubbegrenzungselement 46 je nach Anwendung unterschiedliche Höhen aufweisen, so dass der Hub der Schmiermittelpumpe 1 individuell anpassbar ist. Alternativ oder zusätzlich zu dem in Fig. 1 dargestellten Ausführungsbeispiel ist es ebenfalls möglich das Hubbegrenzungselement 46 an dem Synchronisationselement 26 selbst anzuordnen.

Zudem kann das Hubbegrenzungselement 46 mit einer Dämpferfunktion ausgestattet sein. Dies ist beispielsweise dadurch gegeben, dass das Hubbegrenzungselement 46 aus einem elastischen Material ausgebildet ist. Es ist aber auch möglich das Hubbegrenzungselement 46 in eine mit dem Hubbegrenzungselement 46 zusammenwirkende Tasche oder Bohrung (nicht dargestellt) eintauchen zu lassen. Ist diese Tasche mit einem Fluid, insbesondere dem Druckfluid gefüllt, kann eine Dämpfung über die Fluidverdrängung aus der Tasche beim Eintauchen des Hubbegrenzungselements 46 bereitgestellt werden.

Weiterhin zeigt Fig. 1 einen Drucksensor 48, der über eine Druckleitung 50 mit einem Rückschlagventil 52 verbunden ist. Das Rückschlagventil 52 ist dabei derart ausgestaltet, dass es den Schmiermittelauslass 10 erst dann freigibt, wenn im Dosierraum 8 ein bestimmter Druck herrscht, der wiederum über den Drucksensor 48 feststellbar ist.

Im Folgenden wird die Funktionsweise der erfindungsgemäßen Schmiermittelpumpe 1 beschrieben. Wie bereits erwähnt, zeigt Fig. 1 die Schmiermittelpumpe 1 in Ruhestellung, bei der sowohl der Arbeitsraum 20 als auch der Totraum 36 und der Dosierraum 8 drucklos gehalten sind. Gleichzeitig ist das Rückstellelement 34 entspannt. Um nun Schmiermittel an die Schmiermittelauslässe 10 zu fördern, wird, wie Fig. 2 zeigt, der Arbeitsraum mit Druck beaufschlagtem Druckfluid aus dem Druckfluidanschluss 24 über die Druckfluidleitung 22 beaufschlagt. Dabei strömt das Druckfluid an dem Synchronisationselement 26 vorbei und baut in dem Arbeitsraum 20 insgesamt einen Druck auf, der auf die Druckbeaufschlagungsflächen 16 der Kolben 4 wirkt. Dadurch werden die Kolben 4 zugestellt. Ein in dem Totraum 36 vorhandenes Druckfluid wird über die Totraumleitung 38 direkt an den Druckfluidtankanschluss 40 ausgegeben und die Rückstellelemente 34 werden komprimiert.

Beim Zustellen der Kolben 4 wird, wie insbesondere der vergrößerten Ansicht aus Fig. 2a zu entnehmen, der Dosierkolbenabschnitt 14 des Kolbens 4 über den Schmiermittelzufuhrkanal 44 geschoben, und schließt diesen komplett ab. Dadurch wird das im Dosierraum 8 befindliche Schmiermittel komprimiert, wodurch sich der gewünschte Schmiermittelförderdruck aufbaut. Ist der gewünschte Schmiermitteldruck erreicht, der über den Drucksensor 48 kontrollierbar ist, wird das Rückschlagventil 52 geöffnet und gibt den Schmiermittelauslass 10 frei, so dass Schmiermittel zu den Verbrauchern gefördert werden kann.

Damit die Kolben 4 gleichmäßig zugestellt werden, und nicht beispielsweise aufgrund von unterschiedlicher Reibung oder Druckverhältnissen an den Auslässen ein zeitversetztes Zustellen der Kolben 4 auftritt, sind die Kolben 4 über das Synchronisationselement 26 miteinander verbunden. Dieses sorgt dafür, dass die Kolben 4 zeitgleich bewegt werden, so dass eine genau getaktete Schmiermittelzufuhr an allen Auslässen möglich ist.

Haben die Kolben 4 ihre Arbeitsendstellung, die über das Hubbegrenzungselement 46 definiert ist, erreicht, schließt das Regelventil 42 die Zufuhr von Druck beaufschlagtem Druckfluid in die Druckfluidleitung 22 und verbindet den Arbeitsraum 20 mit dem Druckfluidtankanschluss 40. Dadurch kann Druckfluid aus dem Arbeitsraum 20 ausströmen, wodurch sich der Druck auf die Kolben 4 verringert.

Fig. 3 zeigt ein derartiges Ausführungsbeispiel, bei dem der Arbeitsraum 20 über das Regelventil 42 mit dem Druckfluidtankanschluss 40 verbunden ist. Ist genügend Druckfluid aus dem Arbeitsraum 20 abgeströmt bzw. der Druck im Arbeitsraum 20 weit genug erniedrigt, können sich die Rückstellelemente 34 entspannen und die Kolben 4 in ihre Ruhelage bewegen. Dazu drücken die Rückstellelemente 34 auf die Synchronisationsplatte 26 und ermöglichen so eine Rückführung des Systems in seine Ausgangslage.

Alternativ oder zusätzlich zu den dargestellten mechanischen Rückstellelementen 34 ist es auch möglich, die Kolben hydraulisch in ihre Ausgangslage zu bewegen. Dazu kann beispielsweise über das Regelventil 42 der Totraum 36 mit dem Druckfluidanschluss 24 verbunden werden, so dass das mit Druck beaufschlagte Druckfluid in den Totraum 36 geleitet wird und die Kolben 4 in ihre Ausgangsstellung zurückstellt.

Beim Zurückführen der Kolben 4 in ihre Ausgangslage entsteht aufgrund des nun geschlossenen Rückschlagventils 52 in dem Dosierraum 8 ein Unterdruck, so dass, sobald der Dosierkolbenabschnitt 14 den Schmiermittelzufuhrkanal 44 wieder freigibt (siehe Fig. 3a), Schmiermittel aus dem Schmiermittelreservoir über den Schmiermittelzufuhrkanal 44 in den Dosierraum 8 gesaugt wird. Dadurch füllt sich der Dosierraum 8 wieder mit Schmiermittel, das dann für den nächsten Schmierzyklus bereitsteht. Dabei wird der nächste Schmierzyklus wiederum durch Umschalten des Regelventils 42 eingeleitet.

Wie insbesondere den Figuren zu entnehmen, sind der Arbeitsraum 20 und Totraum 36 vorteilhafterweise einem eigenen Druckfluidkreislauf zugeordnet, so dass eine vollständige Trennung zwischen Druckfluidkreislauf und Schmiermittelkreislauf gegeben ist. Dadurch kann sichergestellt werden, dass das an den Schmiermittelauslässen 10 geförderte Schmiermittel nicht mit Druckfluid verunreinigt ist. Sofern der Totraum 36 druckunbeaufschlagt ist, dient dieser als zusätzliche Sperre, um das druckbeaufschlagte Druckfluid wirksam vom Schmiermittelkreislauf zu trennen. Statt eines extra zu verwendenden Druckfluids kann aber selbstverständlich auch das als Schmiermittel verwendete Fluid als Druckfluid eingesetzt werden. Weiterhin kann den Figuren entnommen werden, dass aufgrund der linearen Anordnung der Kolben 4 nebeneinander eine besonders kompakte und platzsparende Anordnung geschaffen wird. Dabei ermöglicht das erfindungsgemäße Synchronisationselement 26, dass die Kolben 4 sich gleichmäßig bewegen. Die Druckbeaufschlagung auf die Kolben 4 erfolgt jedoch über das in den Arbeitsraum 20 eingeführte Druckfluid und nicht über die Synchronisationsplatte 26. Dadurch kann eine beliebige Anzahl von Kolben 4 mit der Synchronisationsplatte 26 verbunden werden, ohne deren Dimensionierung druckabhängig anpassen zu müssen.

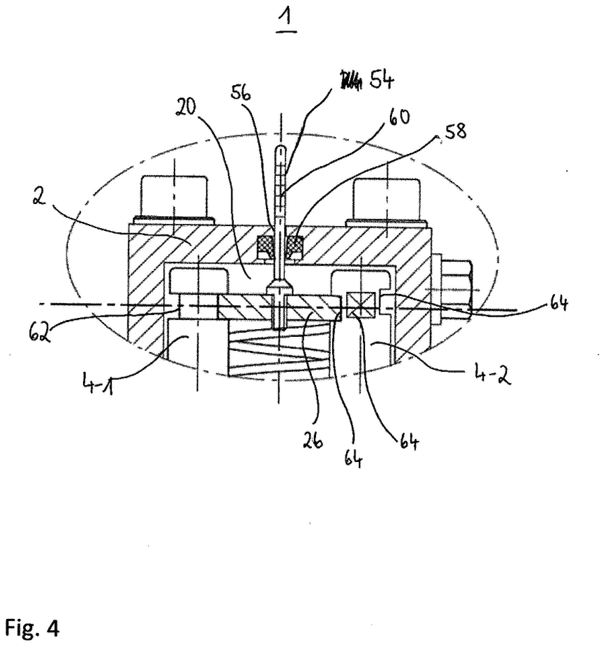

Um eine optische Kontrolle der Kolbenlage bereitzustellen, kann an dem Synchronisationselement 26 oder aber auch an einem der Kolben 4 ein Hubstift angeordnet sein, über den leicht und einfach die Funktionsweise der Schmiermittelpumpe 1 überwacht werden kann. Eine derartige Ausgestaltung ist in Figur 4 gezeigt. Dabei zeigt Figur 4 eine Detailschnittansicht durch die Schmiermittelpumpe 1 im Bereich des Arbeitsraums 20. Wie der Figur 4 zu entnehmen, ist an dem Synchronisationselement 26 ein Hubstift 54 angeordnet, der sich durch eine Öffnung 56 im Gehäuse 2 in einen Außenraum erstreckt. Um trotzdem den Arbeitsraum 20 fluiddicht zu halten, ist weiterhin mindestens ein Dichtelement 58 vorgesehen, das die Öffnung 56 fluiddicht abdichtet. Der Hubstift 54 selbst trägt eine Skala 60, an der die Position des Synchronisationselements 26 und damit die Position der Kolben 4 abgelesen und bestimmt werden kann. Gleichzeitig kann über den Hubstift 54 ganz allgemein die Funktion der Schmiermittelpumpe 1 abgelesen werden.

Weiterhin zeigt Fig. 4, dass das Synchronisationselement 26 unterschiedlich mit den Kolben 4 verbunden werden kann. Beispielsweise kann an dem Kolben 4-1 eine einzelne Aufnahme, beispielsweise eine umlaufende Nut 62, ausgebildet sein, in die das Synchronisationselement 26 eingreift. Alternativ kann, wie dem rechten Kolben 4-2 zu entnehmen, an dem Kolben 4-2 eine oder mehrere, insbesondere höhenunterschiedliche, Aufnahmen 64 ausgebildet sein, die unterschiedliche Relativposition zwischen Kolben 4-2 und Synchronisationselement 26 ermöglichen. Dadurch kann die Volumenmenge von Schmiermittel in den zugehörigen Dosierräumen 8-1, 8-2 verändert werden, da der Dosierkolbenabschnitt 14 der Kolben 4-1 und 4-2 zu unterschiedlichen Zeiten während des Kolbenhubs die Schmiermittelzufuhrkanäle 44 abschließt. Dadurch kann eine unterschiedliche Menge Schmiermittel an die Schmiermittelauslässe 10 gefördert werden.

Weiterhin ermöglicht die erfindungsgemäße Ausgestaltung, dass die Druckübersetzung unabhängig von der Zahl der bereitgestellten Schmiermittelauslässe 10 ist.

Insgesamt stellt die erfindungsgemäße Schmiermittelpumpe eine wartungsfreundliche und robuste Schmiermittelpumpe bereit, die platzsparend und einfach an verschiedenen Einsatzorten anbringbar ist. Zudem ist die Zahl der zu verbauenden und störungsanfälligen Teile deutlich reduziert, so dass auch die Lebensdauer insgesamt erhöht und die Montagekosten trotzdem verringert werden konnten.

### Bezugszeichenliste

- 1: Schmiermittelpumpe
- 2: Gehäuse
- 4: Kolben
- 6: Schmiermittelzufuhranschluss
- 8: Dosierraum
- 10: Schmiermittelauslass
- 12: Arbeitskolbenabschnitt
- 14: Dosierkolbenabschnitt
- 16; 18: Druckbeaufschlagungsflächen
- 20: Arbeitsraum
- 22: Druckfluidleitung
- 24: Druckfluidanschluss für Druckfluid mit Druckbeaufschlagung
- 26: Synchronisationselement
- 28: Innenwandung des Arbeitsraums
- 30: Spalt
- 32: Druckfluidleitungsmündung
- 34: Rückstellelement
- 36: Totraum
- 38: Totraumleitung
- 40: Druckfluidtankanschluss
- 42: Regelventil
- 44: Schmiermittelzufuhrkanal
- 46: Hubbegrenzung
- 48: Drucksensor
- 50: Druckleitung
- 52: Rückschlagventil
- 54: Hubstift
- 56: Öffnung
- 58: Dichtelement
- 60: Skala
- 62: umlaufende Nut
- 64: Aufnahmen höhenunterschiedlich

## Patentansprüche

1. Schmiermittelpumpe (1), insbesondere für eine Zylinderschmierung eines Verbrennungsmotors, mit mehreren Schmiermittelauslässen (10), die über mehrere Kolben (4) mit Schmiermittel beaufschlagbar sind, wobei die Kolben (4) mittels mindestens eines Synchronisationselements (26) miteinander wirkverbunden sind, **dadurch gekennzeichnet, dass** die Schmiermittelpumpe mindestens einen Arbeitsraum (20) für die Kolben (4) aufweist, dem ein Druckfluid zuführbar ist, über das die Kolben (4) mit Druck beaufschlagbar sind.

2. Schmiermittelpumpe (1) nach Anspruch 1, wobei das Synchronisationselement (26) von dem Druckfluid druckunbeeinflusst in dem Arbeitsraum (20) angeordnet ist.

3. Schmiermittelpumpe (1) nach Anspruch 1 oder 2, wobei das Synchronisationselement (26) derart in dem Arbeitsraum (20) angeordnet ist, dass zwischen einer Innenwandung (28) des Arbeitsraums (20) und dem Synchronisationselement (26) ein Spalt (30) verbleibt.

4. Schmiermittelpumpe (1) nach einem der vorhergehenden Ansprüche, wobei das Synchronisationselement (26) mindestens eine Durchlassöffnung für das Druckfluid aufweist.

5. Schmiermittelpumpe (1) nach einem der vorhergehenden Ansprüche, wobei die Kolben (4) als Stufenkolben mit einem Arbeitskolbenabschnitt (12) und einem Dosierkolbenabschnitt (14) ausgebildet sind.

6. Schmiermittelpumpe (1) nach Anspruch 5, wobei der Arbeitskolbenabschnitt (12) eine größere Druckbeaufschlagungsfläche (16), insbesondere einen größeren Durchmesser, aufweist als eine Druckbeaufschlagungsfläche (18) des Dosierkolbenabschnitts (14), wobei vorzugsweise die Druckbeaufschlagungsfläche (16) des Arbeitskolbenabschnitts (12) um ein vielfaches, insbesondere um ein vier- bis fünffaches, größer ist als die Druckbeaufschlagungsfläche (18) des Dosierkolbenabschnitts (14).

7. Schmiermittelpumpe (1) nach Anspruch 6, wobei die Kolben (4) voneinander unterschiedlich große Druckbeaufschlagungsflächen (16; 18) am Arbeitskolbenabschnitt (12) und/oder Dosierkolbenabschnitt (14) aufweisen.

8. Schmiermittelpumpe (1) nach einem der vorhergehenden Ansprüche, wobei weiterhin mindestens ein Rückstellelement (34), insbesondere eine Rückstellfeder, vorgesehen ist, das dazu ausgelegt ist, die Kolben (4) in eine Ausgangsposition rückzustellen.

9. Schmiermittelpumpe (1) nach Anspruch 8, wobei das mindestens eine Rückstellelement (34) mit dem Synchronisierungselement (26) in Wirkverbindung steht, wobei vorzugsweise ein Rückstellelement (34) zwischen zumindest zwei benachbarten Kolben (4) angeordnet ist.

10. Schmiermittelpumpe (1) nach einem der vorhergehenden Ansprüche, wobei die Kolben (4) linear in mindestens einer Reihe nebeneinander angeordnet sind.

11. Schmiermittelpumpe (1) nach einem der vorhergehenden Ansprüche, wobei ein Druckfluidkreislauf und ein Schmiermittelkreislauf über einen Totraum (36) voneinander getrennt ausgebildet sind.

## Claims

1. Lubricant pump (1), in particular for cylinder lubrication of an internal combustion engine, having multiple lubricant outlets (10) which are able to be acted upon by lubricant via multiple pistons (4), wherein the pistons (4) are operatively connected to one another by means of at least one synchronization element (26), **characterized in that** the lubricant pump has, for the pistons (4), at least one working chamber (20) to which a pressurized fluid is able to be supplied, via which fluid the pistons (4) are able to be subjected to pressure.

2. Lubricant pump (1) according to Claim 1, wherein the synchronization element (26) is arranged in the working chamber (20) such that it is uninfluenced in terms of pressure by the pressurized fluid.

3. Lubricant pump (1) according to Claim 1 or 2, wherein the synchronization element (26) is arranged in the working chamber (20) such that a gap (30) remains between an inner wall (28) of the working chamber (20) and the synchronization element (26).

4. Lubricant pump (1) according to one of the preceding claims, wherein the synchronization element (26) has at least one passage opening for the pressurized fluid.

5. Lubricant pump (1) according to one of the preceding claims, wherein the pistons (4) are in the form of stepped pistons with a working piston section (12) and a dosing piston section (14).

6. Lubricant pump (1) according to Claim 5, wherein the working piston section (12) has a pressurization area (16) with a larger size, in particular a larger diameter, than a pressurization area (18) of the dosing piston section (14), wherein preferably the pressurization area (16) of the working piston section (12) is larger by a multiple, in particular is four or five times larger, than the pressurization area (18) of the dosing piston section (14).

7. Lubricant pump (1) according to Claim 6, wherein the pistons (4) have pressurization areas (16; 18) of different sizes from one another at the working piston section (12) and/or dosing piston section (14) .

8. Lubricant pump (1) according to one of the preceding claims, wherein furthermore there is provided at least one restoring element (34), in particular a restoring spring, which is designed for the restoring movement of the pistons (4) into a starting position.

9. Lubricant pump (1) according to Claim 8, wherein the at least one restoring element (34) is operatively connected to the synchronization element (26), wherein preferably a restoring element (34) is arranged between at least two adjacent pistons (4).

10. Lubricant pump (1) according to one of the preceding claims, wherein the pistons (4) are arranged linearly next to one another in at least one row.

11. Lubricant pump (1) according to one of the preceding claims, wherein a pressurized fluid circuit and a lubricant circuit are formed such that they are separated from one another via a dead volume (36).

## Revendications

1. Pompe à lubrifiant (1), destinée en particulier à la lubrification de cylindres d'un moteur à combustion interne, comprenant une pluralité de sorties de lubrifiant (10) alimentées en lubrifiant par une pluralité de pistons (4), les pistons (4) étant reliés fonctionnellement entre eux au moyen d'au moins un élément de synchronisation (26), **caractérisée en ce que** la pompe à lubrifiant comporte au moins une chambre de travail (20) qui est destinée aux pistons (4) et à laquelle peut être amené un fluide sous pression par le biais duquel les pistons (4) peuvent être alimentés en pression.

2. Pompe à lubrifiant (1) selon la revendication 1, dans laquelle l'élément de synchronisation (26) est disposé dans la chambre de travail (20) de manière à ne pas être influencé par la pression du fluide sous pression.

3. Pompe à lubrifiant (1) selon la revendication 1 ou 2, dans laquelle l'élément de synchronisation (26) est disposé dans la chambre de travail (20) de telle manière qu'un espace (30) est ménagé entre une paroi intérieure (28) de la chambre de travail (20) et l'élément de synchronisation (26).

4. Pompe à lubrifiant (1) selon l'une des revendications précédentes, dans laquelle l'élément de synchronisation (26) comporte au moins un orifice de passage du fluide sous pression.

5. Pompe à lubrifiant (1) selon l'une quelconque des revendications précédentes, dans laquelle le piston (4) est conçu comme un piston à gradins pourvu d'une partie de piston de travail (12) et d'une partie de piston de dosage (14).

6. Pompe à lubrifiant (1) selon la revendication 5, dans laquelle la partie de piston de travail (12) a une surface de mise sous pression (16), en particulier un diamètre, qui est supérieur à une surface de mise sous pression (18) de la partie de piston de dosage (14), la surface de mise sous pression (16) de la partie de piston de travail (12) étant de préférence supérieure d'un multiple, en particulier d'un facteur quatre à cinq, à la surface de mise sous pression (18) de la partie de piston de dosage (14).

7. Pompe à lubrifiant (1) selon la revendication 6, dans laquelle les pistons (4) ont des surfaces de mise sous pression (16 ; 18) de tailles différentes au niveau de la partie de piston de travail (12) et/ou de la partie de piston de dosage (14).

8. Pompe à lubrifiant (1) selon l'une quelconque des revendications précédentes, dans laquelle au moins un élément de rappel (34), en particulier un ressort de rappel, est en outre prévu pour ramener le piston (4) dans une position initiale.

9. Pompe à lubrifiant (1) selon la revendication 8, dans laquelle l'au moins un élément de rappel (34) est relié fonctionnellement à l'élément de synchronisation (26), un élément de rappel (34) étant de préférence disposé entre au moins deux pistons adjacents (4).

10. Pompe à lubrifiant (1) selon l'une quelconque des revendications précédentes, dans laquelle les pistons (4) sont disposés les uns à côté des autres linéairement dans au moins une rangée.

11. Pompe à lubrifiant (1) selon l'une quelconque des revendications précédentes, dans laquelle un circuit de fluide sous pression et un circuit de lubrifiant sont conçus séparément l'un de l'autre par le biais d'un espace mort (36).
